# EUROPEAN PATENT SPECIFICATION

(11) **EP 3 060 616 B1**
(45) Date of publication and mention of the grant of the patent: **07.06.2023**
(21) Application number: 13895979.6
(22) Date of filing: 21.10.2013
(51) Int. Cl.: C09D 7/61, C09D 5/33, C09D 133/04, E01F 9/506, C09D 7/40, C08K 3/36, C08K 7/26, C08K 7/20

(54) **WATERBORNE LATEX PAINT COMPOSITIONS FOR HIGHWAY MARKING**
WÄSSRIGE LATEXLACKZUSAMMENSETZUNGEN FÜR STRASSENMARKIERUNG
COMPOSITIONS DE PEINTURE AU LATEX À BASE D'EAU POUR LE MARQUAGE ROUTIER

(43) Date of publication of application: 31.08.2016
(73) Proprietor: Potters Industries, LLC, Wilmington DE 19808 (US)
(72) Inventor: JEGANATHAN, Suruliappa, Chadds Ford, Pennsylvania 19317 (US); DAVIES, Chris, Plymouth Meeting, Pennsylvania 19462 (US); GOFORTH, Kevin, Chester Springs, Pennsylvania 19425 (US)
(74) Representative: Marks & Clerk LLP
(86) International application number: PCT/US2013/065909
(87) International publication number: WO 2015/060811

(56) References cited:
- EP-A2- 0 791 637
- GB-A- 2 255 099
- US-A1- 2011 059 295
- US-A1- 2011 195 179
- US-A1- 2012 123 138
- US-B1- 6 475 556

## Description

### BACKGROUND OF THE INVENTION

### Field of the Invention

The present invention relates to the field of highway marking paints and more particularly to the field of rapidly drying waterborne latex paint compositions.

### Description of the Related Art

Two desirable features for highway marking paint compositions are that the compositions are durable and that they dry rapidly. Because of the manpower involved in marking roadways and the associated material costs, it is desirable that a highway marking last a minimum of 4 years and more preferably up to 7 years or longer. Moreover, it is highly desirable that the highway marking dry rapidly to prevent the paint from running across the roadway and to minimize the disruption to traffic flow while the highway marking is being applied.

One technique to enhance durability is to apply a thicker layer of paint. A thin paint layer of 0.635 mm (25 mil) or less will likely have a 1 year life and at best 2-3 years. A thicker paint layer of 1.524 mm (60 mil) or greater will typically last for 4-7 years. Accordingly, there is a strong desire to apply a thicker paint layer when marking highways.

The main constraint to applying a thick highway paint layer is the drying time of the paint. Thermoplastic materials that are heated immediately after application to set the paint layer have regularly been used to obtain the desired thick highway paint layer. However, because of its cost and need for extra machinery, there has been an effort to develop a less expensive paint system. Several of these systems are discussed below.

U.S. Patent No. 6,013,721 describes the use of polymer containing one acid and one amine functionality to improve the storage stability and drying time of the waterborne paint. The system was able to produce a paint layer having a wet film thickness of 0.3556 mm (14 mil).

U.S. Patent No. 5,340,870 describes the use of a filler such as calcium carbonate added to an acrylic binder to increase the viscosity and dry time of the paint. The filler is added at a 60-75% ratio relative to the binder. Because of the high content of the inorganic filler the paint dries fast but its storage stability is poor and it does not give durable markings once applied on roads.

U.S. Patent No 6,132,132 discloses various types of drying agents including ion exchange resins, superabsorbent gels such as Sumica gel, and hollow-sphere polymers such as Ropaque^{®} OP-62 to improve the drying time of the waterborne paint for traffic markings.

U.S. Patent No. 6,333,068 describes the use of metallic polychloride and synthetic polyamides as accelerators. These accelerators dry the 15 mil thickness waterborne paint fast.

U.S. Patent No. 6,413,011 describes multicomponent fast drying waterborne coatings of 0.3302-0.381 mm (13-15 mil) wet film thickness. These coatings include extenders such as calcium carbonate, talc, silica and silicates as well as fillers such as glass beads, quartz and sand. The disclosed extenders are hard dense materials.

U.S. Patent No. 6,475,556 discusses the need for fast drying of thick films of waterborne paint above 0.508 mm (20 mil) and up to 3.048 mm (120 mil) in thickness. However methods are disclosed that only dry films of 0.508-1.016 mm (20-40 mil) wet thickness. An ion exchange resin is used as the drying agent and a small amount of polyamine resin is added to the binder as well.

U.S. Patent No. 6,645,552 describes the use of ion exchange resin as drying agent for waterborne paint with wet mm (39.3701mil) thickness of 0.762 mm (30 mil). The paint is applied as a wet on wet or layer by layer coating; with each layer being 0.381 mm (15 mil).

U.S. Patent No. 5,922,398 describes the use of pendant amino-containing polymer along with acrylic polymers so that the pH is adjusted to provide for fast drying. The coatings achieved with this system are described as having a wet film thickness of 0.381 mm (15 mil).

Although the systems discussed in the patents above were able to speed up drying time of the highway paint, they were not able to achieve waterborne traffic markings having a thickness greater than 0.762 mm (30 mil) wet thickness. At such a thickness, the underlying roadway will need to be repainted on an annual basis. There is a need for a waterborne traffic marking system which has greater thickness and increased durability.

### Summary of the Invention

Highly durable thick lane markings have been typically applied by using thermoplastic binders at 2.032-3.048 mm (80-120 mil) wet thickness which are applied at high temperature (150 °C - 205 °C (300-400 °F)). Waterborne paint on the other hand is applied at ambient temperatures and is easier to make traffic markings. However, waterborne paint has not been used at these thicknesses because they require more time to dry and as the wet film thickness increases the liquid paint, although viscous, tends to flow sideways and run. The present invention provides a waterborne paint composition for highway traffic markings which can be applied at greater thicknesses than the current waterborne latex paint. The present invention also enables application of retroreflective elements on the thick paint layer to achieve retroreflective traffic markings.

The present invention is a waterborne paint of 1.016-3.048 mm (40-120 mil) wet thickness with improved durability and retroreflectivity. The paint composition uses regular waterborne paint, retroreflective glass beads, porous silica, and optionally an acrylic emulsion in water. The porous silica helps to form a highly viscous paint composition with glass beads through hydrogen bonding and reducing the pH of the latex paint. This paint provides very cost effective and environmentally friendly traffic markings of high thickness and an alternative to thermo plastic markings which requires high temperature to apply and are very expensive compared to waterborne paint.

Existing waterborne traffic markings obtain faster drying times by using ion exchange resins. Even with such faster drying times, these existing systems can only achieve relatively thin paint layers of 0.381-0.762 mm (15-30 mil) wet thickness. The present invention uses retroreflective glass beads, porous silica, and optionally an acrylic emulsion in water to apply a thick paint layer having a wet thickness of 1.016-3.048 mm (40 -120 mil) with improved durability. The use of acrylic emulsion is optional depending on the road conditions.

### Detailed Description of the Preferred Embodiments

The present invention describes the use of waterborne acrylic latex paint, glass beads, and silica materials with low porosity, and acrylic polymer emulsion to develop a paint composition that can be applied at greater thicknesses than regular waterborne latex paints. Retroreflective elements are added on top of the layer to have retroreflecting highway markings on roads or other surfaces.

The waterborne latex paint used in this invention can be the regular paint used for highway traffic markings. Examples include paints from Sherwin Williams or Ennis.

The glass beads added to the paint are retroreflective beads having a particle size ranging from 0.074 mm to 0.841 mm (20 to 200 US Mesh). The advantage of providing these beads inside the paint layer is to increase the retroreflectivity as the paint begins to wear.

Porous silica when added to the paint helps to increase the viscosity of the paint through strong hydrogen bonding with acrylic polymer and water. This also reduces the pH of the paint which is usually basic. Porous silica is acidic with pH of 6-6.5. It is presently believed that the acidic nature of the porous silica as well as the pores permits the present paint system to set up quicker and allow greater thicknesses. Preferably, the porous silica has a pore volume in the range of 1.0 cc/g to 1.9 cc/g and preferably between 1.08 cc/g and 1.78 cc/g. The porous silica has a surface area in the range of from 300 m²/g to 400 m²/g, preferably between 320 m²/g and 380 m²/g.

When these three components, paint, glass beads and porous silica, are mixed, the overall formulation becomes more viscous than the paint, thus allowing the formulation to be sprayed or drawn down on surfaces like asphalt or others so that a wet film thickness of 1.524-3.048 mm (60-120 mil) can be achieved. Addition of an acrylic water based binder like Ropaque^{®} Ultra EF, Rovene^{®} 6018, and Rovene^{®} 6020 helps the paint layer to dry easily without any cracks.

The ratio of porous silica to paint can range from 5:300 to 30:300, preferably between 10:300 and 20:300. The ratio of acrylic polymer emulsion to paint can be 5:300 to 30:300, preferably between 10:300 and 20:300.

The retroreflective glass beads can be dropped over or otherwise mixed with the 1.524-3.048 mm (60-120 mil) thick paint layer to achieve retroreflectivity. Such glass beads include standard M247, Ultra 1.90, VisiMax^{®}, and Visibead^{®}, all trademarks of Potters Industries.

Since the present invention deals with thick waterborne paint layer, bigger beads like Visibead^{®} can also be added in the paint formulation that helps to maintain retroreflectivity better than small beads as the paint begins to wear. In addition, such larger beads also provide improved wet night visibility.

### EXAMPLES

### Example 1

In a plastic beaker, 300 g of Sherwin Williams^{®} white paint was added followed by 60 g of glass beads (0.177 mm to 0.841 mm (80-200 US mesh)) and 15 g of porous silica (0.177 mm to 1.00 mm (18-80 US mesh)). After mixing, the resulting paint composition was drawn down on a 15x45 cm (6x18 inch) glass panel using a blade with 2.54 mm (100 mil) gap. Standard M247 glass beads (coated with Potters^{®} AC-110 formulation) were dropped over the paint layer and the composition was dried at room temperature.

In place of Standard M247 beads, other retro reflective beads such as Visibead^{®}, VisiMax^{®}, Ultra 1.90 beads can also be dropped.

### Example 2

In a plastic beaker, 300 g of Sherwin Williams^{®} yellow paint was added followed by 60 g of glass beads (0.177 mm to 0.841 mm (80-200 US mesh)) and 15 g of porous silica (0.177 mm to 1.00 mm (18-80 US mesh)). After mixing, the resulting paint composition was drawn down on a 15x45 cm (6x18 inch) glass panel using a blade with 2.54 mm (100 mil) gap. Standard M247 glass beads (coated with Potters^{®} AC-110 formulation) were dropped over the paint layer and the composition was dried at room temperature.

In place of Standard M247 beads, other retro reflective beads such as Visibead^{®}, VisiMax^{®}, Ultra 1.90 beads can also be dropped.

### Example 3

In a plastic beaker, 300 g of Sherwin Williams^{®} white paint was added followed by 60 g of glass beads (0.177 mm to 0.841 mm (80-200 US mesh)) and 15 g of porous silica (0.177 mm to 1.00 mm (18-80 US mesh)). After mixing, the resulting paint composition was drawn down on a 15x45 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.177 mm to 0.297 mm (50/80 US mesh) bead, were dropped over the paint layer and the composition was dried at room temperature.

In place of Standard M247 beads, other retro reflective beads such as Visibead^{®}, VisiMax^{®}, Ultra 1.90 beads can also be dropped.

### Example 4

In a plastic beaker, 300 g of Sherwin Williams^{®} yellow paint was added followed by 60 g of glass beads (0.177 mm to 0.841 mm (80-200 US mesh)) and 15 g of porous silica (0.177 mm to 1.00 mm (18-80 US mesh)). After mixing, the resulting paint composition was drawn down on a 15x45 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.177 mm to 0.297 mm (50/80 US mesh) bead, were dropped over the paint layer and the composition was dried at room temperature.

In place of Standard M247 beads, other retro reflective beads such as Visibead^{®}, VisiMax^{®}, Ultra 1.90 beads can also be dropped.

### Example 5

In a plastic beaker, 300 g of Sherwin Williams^{®} yellow paint was added followed by 60 g of Visibead^{®} beads and 15 g of porous silica (0.177 mm to 1.00 mm (18-80 US mesh)). After mixing, the resulting paint composition was drawn down on a 15x45 cm (6x18 inch) glass panel using a blade with 2.54 mm (100 mil) gap. A combination of two retroreflective beads, Standard M247 glass beads (coated with Potters AC-110 formulation) and a high refractive index (1.9) 0.177 mm to 0.297 mm (50/80 US mesh) bead were dropped over the paint layer and the compostion was dried at room temperature.

In place of Standard M247 beads, other retro reflective beads such as Visibead^{®}, VisiMax^{®}, Ultra 1.90 beads can also be dropped.

### Example 6

In a plastic beaker, 300 g of Sherwin Williams^{®} white paint was added followed by 60 g of glass beads (0.177 mm to 0.841 mm (80-200 US mesh)),15 g of porous silica (0.177 mm to 1.00 mm (18-80 US mesh)), and 15 g of acrylic emulsion Ropaque^{®} Ultra EF (DOW). After mixing, the resulting paint composition was drawn down on a 15x45 cm (6x18 inch) glass panel using a blade with 2.54 mm (100 mil) gap. Standard M247 glass beads (coated with Potters^{®} AC-110 formulation) were dropped over the paint layer and the composition was dried at room temperature.

In place of Standard M247 beads, other retro reflective beads such as Visibead^{®}, VisiMax^{®}, Ultra 1.90 beads can also be dropped.

Instead of Ropaque^{®} acrylic emulsion, other acrylic emulsion like Rovene^{®} 6018 or Rovene^{®} 6020 can also be used.

### Example 7

In a plastic beaker, 300 g of Sherwin Williams^{®} yellow paint was added followed by 60 g of glass beads (0.177 mm to 0.841 mm (80-200 US mesh)), 15 g of porous silica (0.177 mm to 1.00 mm (18-80 US mesh)), and 15 g of acrylic emulsion Ropaque^{®} Ultra EF (DOW). After mixing, the resulting paint composition was drawn down on a 15x45 cm (6x18 inch) glass panel using a blade with 2.54 mm (100 mil) gap. Standard M247 glass beads (coated with Potters^{®} AC-110 formulation) were dropped over the paint layer and the composition was dried at room temperature.

In place of Standard M247 beads, other retro reflective beads such as Visibead^{®}, VisiMax^{®}, Ultra 1.90 beads can also be dropped.

Instead of Ropaque^{®} acrylic emulsion, other acrylic emulsion like Rovene^{®} 6018 or Rovene^{®} 6020 can also used.

### Example 8 - Flow properties:

One hundred and fifty grams of Sherwin Williams waterborne latex paint with or without either glass beads or porous silica gel was placed in a metal can and then the can was placed at a 45 degree angle and the contents were allowed to flow and captured in another container placed below. The weight of the material flowed to the second can was determined which is the flow rate. The higher the flow rate percentage, the less viscous are the contents. The low viscosity allows the formulation to be applied at higher wet mm (39.3701 mil) thickness. Table 1 illustrates the effect of silica gel on the viscosity of the formulation.

**TABLE 1**

| Formulation | Flow rate |
|---|---|
| SW paint (150g) | 89% |
| SW paint (150 g)+30g M247 beads | 89% |
| SW paint (150 g)+30g M247 beads + 7.5g porous silica gel | 77% |

### Example 9 - Road trials:

Trial 1: At the truck speed of 1.61 kph (1 mph), the product described Example 1 (60 g of glass beads (0.177 mm to 0.841 mm (80-200 US mesh)) and 15 g of porous silica (0.177 mm to 1.00 mm (18-80 US mesh))) was injected into the paint stream at 0.23-0.36 kg/liter of paint. The thickness of the traffic markings was at 1.27-1.397 wet mm (50-55 wet mil) and the drying time was about 30 min. The drop on bead for retro reflectivity on this marking was the standard M247 AC110 glass beads (Potters Industries).

Trial 2: At the truck speed of 3.22 kph (2 mph), the product described in Example 1 (60 g of glass beads (0.177 mm to 0.841 mm (80-200 US mesh)) and 15 g of porous silica (0.177 mm to 1.00 mm (18-80 US mesh))) was injected into the paint stream at 0.6 kg/liter of paint. The thickness of the traffic markings was at 1.016-1.27 wet mm (40-50 wet mil) and the drying time was about 20 min. The drop on bead for retro reflectivity on this marking was the standard M247 AC110 glass beads (Potters Industries).

Trial 3: At the truck speed of 4.82 kph (3 mph), the product described in Example 1 (60 g of glass beads (0.177 mm to 0.841 mm (80-200 US mesh)) and 15 g of porous silica (0.177 mm to 1.00 mm (18-80 US mesh))) was injected into the paint stream at 1.2 kg/liter of paint. The thickness of the traffic markings was at 1.524-1.778 mm (60-70 wet mil) and the drying time was about 5 min. The drop on bead for retro reflectivity on this marking was the standard M247 AC110 glass beads (Potters Industries).

Although the invention is illustrated and described herein with reference to specific embodiments, the invention is not intended to be limited to the details shown.

## Claims

1. A highway marking paint comprising:
a. waterborne latex paint; and
b. porous silica having a particle size ranging from 0.177 mm to 1.00 mm (18 to 80 US Mesh), a pore volume in the range of 1.0 cc/g to 1.9 cc/g, and optionally wherein the ratio of silica to paint is in the range of 5:300 to 30:300.

2. The highway marking paint of claim 1 further comprising retroreflective glass beads, optionally wherein said retroreflective glass beads have a particle size ranging from 0.074 mm to 0.841 mm (20 to 200 US Mesh).

3. The highway marking paint of claim 1 further comprising an acrylic polymer emulsion, and optionally wherein the ratio of acrylic polymer emulsion to paint is in the range of 5:300 to 30:300.

4. A highway marking having a thickness of at least 1.016 mm (40 mil) comprising:
a. waterborne latex paint;
b. porous silica having a particle size ranging from 0.177 mm to 1.00 mm (18 to 80 US Mesh), a pore volume in the range of 1.0 cc/g to 1.9 cc/g, and optionally wherein the ratio of silica to paint is in the range of 5:300 to 30:300.

5. The highway marking of claim 4 further comprising retroreflective glass beads.

6. The highway marking of claim 5 wherein said retroreflective glass beads have a particle size ranging from 0.074 mm to 0.841 mm (20 to 200 US Mesh).

7. The highway marking of claim 4 further comprising an acrylic polymer emulsion.

8. The highway marking of claim 7 wherein the ratio of acrylic polymer emulsion to paint is in the range of 10:300 to 20:300.

9. The highway marking of claim 4 having a thickness of at least 1.524 mm (60 mil).

10. The highway marking of claim 9 having a thickness of at least 2.286 mm (90 mil).

11. The highway marking of claim 10 having a thickness of at least 3.028 mm (120 mil).

12. A method of applying a highway marking comprising the steps of:
a. providing a paint composition according to Claim 1, the paint further comprising retroreflective glass beads and an acrylic polymer emulsion; and
b. applying said paint composition to a transportation corridor at a thickness of at least 1.016 mm (40 mil).

13. A method of applying a highway marking comprising the steps of:
a. dispensing a stream of waterborne latex paint;
b. forming a paint composition by injecting into said stream of a waterborne latex paint porous silica having a particle size ranging from 0.177 mm to 1.00 mm (18 to 80 US Mesh), a pore volume in the range of 1.0 cc/g to 1.9 cc/g, retroreflective glass beads having a particle size ranging from 0.074 mm to 0.177mm (80 to 200 US Mesh), and an acrylic polymer emulsion; and
c. applying said paint composition to a transportation corridor at a thickness of at least 1.016 mm (40 mil).

## Patentansprüche

1. Schnellstraßenmarkierungsfarbe umfassend:
a. Latexfarbe auf Wasserbasis, und
b. poröses Siliciumdioxid, das eine Teilchengröße im Bereich von 0,177 mm bis 1,00 mm (18 bis 80 US-Maschen), ein Porenvolumen im Bereich von 1,0 cm³/g bis 1,9 cm³/g aufweist und wobei wahlweise das Verhältnis von Siliciumdioxid zu Farbe im Bereich von 5:300 bis 30:300 liegt.

2. Schnellstraßenmarkierungsfarbe nach Anspruch 1, ferner retroreflektierende Glasperlen umfassend, wobei wahlweise die retroreflektierenden Glasperlen eine Teilchengröße im Bereich von 0,074 mm bis 0,841 mm (20 bis 200 US-Maschen) aufweisen.

3. Schnellstraßenmarkierungsfarbe nach Anspruch 1, ferner eine acrylische Polymeremulsion umfassend und wobei wahlweise das Verhältnis von acrylischer Polymeremulsion zu Farbe im Bereich von 5:300 bis 30:300 liegt.

4. Schnellstraßenmarkierung, die eine Dicke mindestens 1,016 mm (40 mil) aufweist, umfassend:
a. Latexfarbe auf Wasserbasis und
b. poröses Siliciumdioxid, das eine Teilchengröße im Bereich von 0,177 mm bis 1,00 mm (18 bis 80 US-Maschen), ein Porenvolumen im Bereich von 1,0 cm³/g bis 1,9 cm³/g aufweist und wobei wahlweise das Verhältnis von Siliciumdioxid zu Farbe im Bereich von 5:300 bis 30:300 liegt.

5. Schnellstraßenmarkierung nach Anspruch 4, ferner retroreflektierende Glasperlen umfassend.

6. Schnellstraßenmarkierung nach Anspruch 5, wobei die retroreflektierenden Glasperlen eine Teilchengröße im Bereich von 0,074 mm bis 0,841 mm (20 bis 200 USschon) aufweisen.

7. Schnellstraßenmarkierung nach Anspruch 4, ferner eine acrylische Polymeremulsion umfassend.

8. Schnellstraßenmarkierung nach Anspruch 7, wobei das Verhältnis von acrylischer Polymeremulsion zu Farbe im Bereich von 10:300 bis 20:300 liegt.

9. Schnellstraßenmarkierung nach Anspruch 4, die eine Dicke von mindestens 1,524 mm (60 mil) aufweist.

10. Schnellstraßenmarkierung nach Anspruch 9, die eine Dicke von mindestens 2,286 mm (90 mil) aufweist.

11. Schnellstraßenmarkierung nach Anspruch 10, die eine Dicke von mindestens 3,028 mm (120 mil) aufweist.

12. Verfahren zum Auftragen einer Schnellstraßenmarkierung, umfassend die Schritte des:
a. Bereitstellens einer Farbezusammensetzung nach Anspruch 1, wobei die Farbe ferner retroreflektierende Glasperlen und eine acrylische Polymeremulsion umfasst; und
b. Auftragens der Farbezusammensetzung auf einen Transportkorridor in einer Dicke von mindestens 1,016 mm (40 mil).

13. Verfahren zum Auftragen einer Schnellstraßenmarkierung; umfassend die Schritte des:
a. Ausgeben eines Stroms von Latexfarbe auf Wasserbasis;
b. Bildens einer Farbzusammensetzung durch Einspritzen, in den Strom einer Latexfarbe auf Wasserbasis, von porösem Siliciumdioxid, das eine Teilchengröße im Bereich von 0,177 mm bis 1,00 mm (18 bis 80 US-Maschen), ein Porenvolumen im Bereich von 1,0 cm³/g bis 1,9 cm³/g aufweist, von retroreflektierenden Glasperlen, die eine Teilchengröße im Bereich von 0,074 mm bis 0,177 mm (80 bis 200 US-Maschen) aufweisen, und einer acrylischen Polymeremulsion; und
c. Auftragens der Farbzusammensetzung auf einen Transportkorridor in einer Dicke von mindestens 1,016 mm (40 mil).

## Revendications

1. Peinture de marquage autoroutier comprenant :
a. une peinture aqueuse au latex ; et
b. de la silice poreuse ayant une taille de particule allant de 0,177 mm à 1,00 mm (de 18 à 80 mesh US), un volume de pore situé dans la plage de 1,0 cm³/g à 1,9 cm³/g, et facultativement dans laquelle le rapport de la silice à la peinture se situe dans la plage de 5:300 à 30:300.

2. Peinture de marquage autoroutier selon la revendication 1 comprenant en outre des billes de verre rétroréfléchissantes, facultativement dans laquelle lesdites billes de verre rétroréfléchissantes présentent une taille de particule allant de 0,074 mm à 0,841 mm (de 20 à 200 mesh US).

3. Peinture de marquage autoroutier selon la revendication 1 comprenant en outre une émulsion polymère acrylique, et facultativement dans laquelle le rapport de l'émulsion polymère acrylique à la peinture se situe dans la plage de 5:300 à 30:300.

4. Marquage autoroutier ayant une épaisseur d'au moins 1,016 mm (40 mils) comprenant :
a. une peinture aqueuse au latex ;
b. de la silice poreuse ayant une taille de particule allant de 0,177 mm à 1,00 mm (de 18 à 80 mesh US), un volume de pore situé dans la plage de 1,0 cm³/g à 1,9 cm³/g, et facultativement dans lequel le rapport de la silice à la peinture se situe dans la plage de 5:300 à 30:300.

5. Marquage autoroutier selon la revendication 4 comprenant en outre des billes de verre rétroréfléchissantes.

6. Marquage autoroutier selon la revendication 5, dans lequel lesdites billes de verre rétroréfléchissantes présentent une taille de particule allant de 0,074 mm à 0,841 mm (de 20 à 200 mesh US).

7. Marquage autoroutier selon la revendication 4 comprenant en outre une émulsion polymère acrylique.

8. Marquage autoroutier selon la revendication 7, dans lequel le rapport de l'émulsion polymère acrylique à la peinture se situe dans la plage de 10:300 à 20:300.

9. Marquage autoroutier selon la revendication 4 ayant une épaisseur d'au moins 1,524 mm (60 mils).

10. Marquage autoroutier selon la revendication 9 ayant une épaisseur d'au moins 2,286 mm (90 mils).

11. Marquage autoroutier selon la revendication 10 ayant une épaisseur d'au moins 3,028 mm (120 mils).

12. Procédé d'application d'un marquage autoroutier comprenant les étapes de :
a. fourniture d'une composition de peinture selon la revendication 1, la peinture comprenant en outre des billes de verre rétroréfléchissantes et une émulsion polymère acrylique ; et
b. application de ladite composition de peinture à un corridor de transport en une épaisseur d'au moins 1,016 mm (40 mils).

13. Procédé d'application d'un marquage autoroutier comprenant les étapes de :
a. distribution d'un écoulement de peinture aqueuse au latex ;
b. mise en forme d'une composition de peinture par injection, dans ledit écoulement de peinture aqueuse au latex, d'une silice poreuse ayant une taille de particule allant de 0,177 mm à 1,00 mm (de 18 à 80 mesh US), un volume de pore situé dans la plage de 1,0 cm³/g à 1,9 cm³/g, de billes de verre rétroréfléchissantes ayant une taille de particule allant de 0,074 mm à 0,177 mm (de 80 à 200 mesh US), et d'une émulsion polymère acrylique ; et
c. application de ladite composition de peinture à un corridor de transport en une épaisseur d'au moins 1,016 mm (40 mils).
